(19) Europäisches Patentamt
European Patent Office
Office européen des brevets

(11) **EP 3 158 193 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(21) Anmeldenummer: **15734087.8**

(22) Anmeldetag: **19.06.2015**

(51) Int Cl.:
*F16L 55/053* (2006.01)   *F04B 11/00* (2006.01)
*F04B 15/02* (2006.01)   *F04B 49/06* (2006.01)

(86) Internationale Anmeldenummer:
**PCT/EP2015/063807**

(87) Internationale Veröffentlichungsnummer:
**WO 2015/197486 (30.12.2015 Gazette 2015/52)**

(54) **VORRICHTUNG UND VERFAHREN ZUM DÄMPFEN VON DRUCKSCHWANKUNGEN IN DER FÖRDERLEITUNG EINER DICKSTOFFPUMPE**

DEVICE AND METHOD FOR DAMPENING PRESSURE PULSATIONS WITHIN THE DISCHARGE PIPING OF A PUMP FOR VISCUOUS FLUIDS

DISPOSITIF ET PROCÉDÉ POUR ATTÉNUER DES PULSATIONS À L'INTÉRIEUR DU TUYAU DE DÉCHARGE D'UNE POMPE POUR FLUIDES VISQUEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2014 DE 102014212021**

(43) Veröffentlichungstag der Anmeldung:
**26.04.2017 Patentblatt 2017/17**

(73) Patentinhaber: **Putzmeister Concrete Pumps GmbH**
**72631 Aichtal (DE)**

(72) Erfinder:
• **HORWATH, Winfried**
**Neuhausen 73765 (DE)**
• **FREITAG, Uli**
**70599 Stuttgart (DE)**
• **HÖVEMEYER, Dirk**
**72581 Dettingen / Erms (DE)**

(74) Vertreter: **Pfiz, Thomas et al**
**Pfiz/Gauss Patentanwälte PartmbB**
**Tübinger Strasse 26**
**70178 Stuttgart (DE)**

(56) Entgegenhaltungen:
EP-A2- 0 389 785    AT-B- 394 034
DE-A1- 2 052 583    JP-A- S5 628 399
US-A1- 2003 221 722

EP 3 158 193 B1

**Beschreibung**

Die Erfindung betrifft eine Vorrichtung und ein Verfahren zum Dämpfen von Druckschwankungen in einer Förderleitung einer Kolben-Dickstoffpumpe, mit mindestens einem mit der Förderleitung kommunizierenden, mit einem kompressiblen Fluid zumindest teilweise befüllten Behältnis zur pulsierenden Aufnahme und Abgabe von Fördergut im Pumpbetrieb der Dickstoffpumpe unter abwechselnder Kompression und Expansion des Fluids.

Dokument US 2003/0221722 A1 offenbart ein Verfahren und eine Vorrichtung zum Dämpfen von Druckschwankungen in einer Förderleitung einer Kolbenpumpe, mit mindestens einem mit der Förderleitung kommunizierenden, mit zumindest teilweise mit Luft befüllten Behältnis zur pulsierenden Aufnahme und Abgabe von Fördergut im Arbeitstakt der Pumpe unter abwechselnder Kompression und Expansion der Luft.

Kolben-Dickstoff- oder Betonpumpen, überwiegend als Zwei-Kolbenpumpen ausgebildet, weisen funktionsbedingt bei der Umschaltung vom Saug- in den Druckhub bzw. umgekehrt eine Förderlücke auf. In einem kurzen Zeitraum von etwa 0,2 bis 1 Sekunde je nach Maschinengröße findet kein Materialfluß statt und der Druck in der Förderleitung bricht kurzzeitig ein. Diese kurzzeitige Unterbrechung des Förderstromes mit entsprechendem Druckeinbruch verursacht Schläge und hohe mechanische Belastungen in der Förderleitung. Materialermüdung und vorzeitiger Ausfall können die Folge sein. Aus diesem Grunde gibt es unterschiedliche Ansätze derartige Druckeinbrüche mittels Dämpfungsmaßnahmen zu minimieren. Beispielsweise werden Membrandämpfer oder Schlauchdämpfer eingesetzt, welche aber nur in einem geringen Druckbereich optimal arbeiten und aufgrund der bewegten Gummimembran, insbesondere bei abrasivem Fördergut, einem hohen Verschleiß unterliegen. Es besteht daher ein Bedarf an einem Dämpfungssystem, das einfach aufgebaut ist, kostengünstig realisierbar ist und bei Verwendung mit dem eingesetzten Fördergut, beispielsweise Dickstoffen wie Beton, Tailings, Flugasche, Slurrys und dergleichen, zuverlässig funktioniert und verschleißarm ist. Eine bekannte Dämpfungsvorrichtung ist der sogenannte Windkessel, bei dem ein saug- und/oder druckseitig an der Pumpe installiertes, mit Gas vorgespanntes Behältnis, meist in Ausführung eines Kessels oder Rohres, seine gespeicherte Energie während der Förderlücke abgibt und so zur deren Verringerung beiträgt. Dies ist ein Standardsystem bei Kolbenmembran- bzw. Plungerpumpen, mit dem ein pulsationsarmer Betrieb erreicht werden kann. Der Windkessel in Kombination mit Zwei-Kolben-Dickstoffpumpen gewährleistet zwar keinen vollständig kontinuierlichen Förderstrom, dämpft aber die Druckeinbrüche und infolgedessen die Rohrleitungsschläge auf ein akzeptables Maß.

Die Aufgabe der vorliegenden Erfindung besteht daher darin, eine Vorrichtung und ein Verfahren der vorgenannten Art besonders kostengünstig und zuverlässig zu gestalten.

Zur Lösung dieser Aufgabe werden die in den Patentansprüchen 1 und 14 angegebenen Merkmalskombinationen vorgeschlagen. Vorteilhafte Ausgestaltungen und Weiterbildungen der Erfindung ergeben sich aus den abhängigen Ansprüchen.

Die Erfindung geht vor allem von der Erkenntnis aus, dass der Füllgrad, also das Volumen, des Fluids in dem Behältnis einen gewissen Mindestwert aufweisen muss, um für eine hinreichende Dämpfungswirkung zu sorgen. Entweicht im Laufe der Zeit ein Teil des Fluids aus dem Behältnis, beispielsweise durch Aufnahme in das Fördergut und Abtransport mit diesem, so muss der Verlust durch Nachfüllen ausgeglichen werden. Wird jedoch zuviel nachgefüllt, so entweicht der Überschuss unnötigerweise in die Förderleitung. Dabei ist zu berücksichtigen, dass die Bereitstellung von unter Druck stehendem Fluid einen nicht zu vernachlässigenden Anteil an den Betriebskosten der gesamten Förderanlage darstellt. Eine unmittelbare Bestimmung des Füllgrads im Behältnis beispielsweise durch einen Schwinggabelsensor hat sich als nicht praxisgerecht erwiesen, da der Sensor durch Einwirkung des Förderguts einem hohen Verschleiß ausgesetzt ist. Auch andere Füllgradsensorarten haben die an sie gestellten Anforderungen nicht befriedigend erfüllen können. Die Erfindung setzt daher an einer Füllgradsteuerung auf Basis des zuverlässig messbaren Förderdrucks in der Förderleitung an. Die Erfindung sieht demnach eine Regeleinrichtung für den Fluid-Füllgrad in dem Behältnis in Abhängigkeit von Betriebsparametern während des Pumpbetriebs vor, die mindestens einen vorzugsweise in dem Behältnis oder der Förderleitung angeordneten Drucksensor zur Bestimmung des Förderdrucks sowie eine elektronische Recheneinheit aufweist, die dazu bestimmt und geeignet ist, ein Druckverhältnis V zwischen Förderdruckwerten während eines Arbeits-taktes der Dickstoffpumpe einerseits und einer Umschaltphase zwischen den jeweiligen Arbeitstakten der zwei Kolben der Dickstoffpumpe andererseits oder einen Mittelwert M des Förderdrucks über ein Zeitintervall während der Umschaltphase als Maß für die Wirksamkeit der Dämpfung zu bestimmen und zu speichern. Der Drucksensor muss nicht unbedingt in dem Behältnis oder in der Förderleitung angeordnet sein, vielmehr kann der Druck des Antriebs- oder Förderfluids an beliebiger Stelle im Fördersystem gemessen werden. Durch die Regelung des Fluid-Füllgrads wird erreicht, dass sich die Dämpfung in einem optimalen Betriebsbereich befindet und gleichzeitig der Bedarf an bereitgestelltem bzw. nachgefülltem Fluid gesenkt wird, wodurch der Energiebedarf der Vorrichtung vermindert wird.

Zum Ausgleich der im Laufe der Zeit auftretenden Fluidverluste ist zweckmäßig eine Befüllvorrichtung zum Befüllen des mindestens einen Behältnisses mit dem Fluid nach Maßgabe der Regeleinrichtung vorgesehen. Ein manuell gesteuertes Nachfüllen ist damit nicht erforderlich. Die Befüllvorrichtung kann bevorzugt als motorisch angetriebener Luftkompressor oder auch als mindestens eine mit dem Fluid befüllte Druckflasche ausgebildet sein.

Um zu verhindern, dass in der Umschaltphase der Dickstoffpumpe Fördergut zurück in Richtung der Pumpe gedrückt wird, ist zweckmäßig ein zwischen der Dickstoffpumpe und dem mindestens einen Behältnis angeordnetes, in Richtung der Dickstoffpumpe sperrendes Rückschlagventil vorgesehen.

Für einen automatisierten Dauerbetrieb der Förderdruckdämpfung in der Umschaltphase ist es von Vorteil, wenn in der Regeleinrichtung untere und obere Schwellwerte für eine Inbetriebnahme und, bei Erreichen des voreingestellten Druckverhältnisses, eine Abschaltung der Befüllvorrichtung gespeichert sind.

Das mindestens eine Behältnis ist zweckmäßig als Druckbehältnis, beispielsweise als Kessel oder Rohr ausgebildet. Weiterhin kann bei Bedarf, beispielsweise bei großen Pumpen und Förderleistungen, mehr als ein Behältnis in paralleler Anordnung an die Förderleitung angeschlossen sein.

Das erfindungsgemäße Verfahren zum Dämpfen von Druckschwankungen in einer Förderleitung einer Zwei-Kolben-Dickstoffpumpe ist dadurch gekennzeichnet, dass mittels einer Regeleinrichtung ein Fluid-Füllgrad in dem Behältnis in Abhängigkeit von Betriebsparametern während des Pumpbetriebs zwischen vorgegebenen Minimal- und Maximalwerten aufrecht erhalten wird. Zweckmäßig wird dabei als Maß für die erreichte Dämpfung von Druckeinbrüchen in der Umschaltphase der Dickstoffpumpe der Förderdruck mit mindestens einem in dem Behältnis oder der Förderleitung angeordneten Drucksensor kontinuierlich bestimmt und mit einer elektronischen Recheneinheit der Regeleinrichtung ein Druckverhältnis V zwischen Förderdruckwerten während des Arbeitstaktes der Dickstoffpumpe einerseits und der Umschaltphase zwischen den jeweiligen Arbeitstakten der zwei Kolben der Dickstoffpumpe andererseits oder ein Mittelwert M des Förderdrucks über ein Zeitintervall während der Umschaltphase bestimmt und gespeichert wird. Als Förderdruckwert des Arbeitstaktes wird bevorzugt ein diskreter Wert im Bereich des Förderdruckmaximums, d.h. ein gegen Ende des Förderhubs gemessener Wert, verwendet, beispielsweise ein nach 70% des Hubes gemessener Förderdruckwert.

Das Behältnis wird bevorzugt nach Maßgabe der Regeleinrichtung mittels einer Befüllvorrichtung automatisch mit dem Fluid beaufschlagt. Dabei ist es von Vorteil, wenn die Befüllvorrichtung bei Erreichen eines vorgegebenen unteren Schwellwerts des Fluid-Füllgrads in dem Behältnis zugeschaltet und bei Erreichen eines vorgegebenen oberen Schwellwerts des Fluid-Füllgrads abgeschaltet wird. Als Fluid wird aus Kostengründen bevorzugt Luft verwendet, jedoch können auch andere Gasarten verwendet werden.

In weiterer Ausgestaltung der Erfindung ist das Rückschlagventil zwischen der Pumpe und der Förderleitung als zwangsgesteuertes Ventil ausgebildet, das nach Maßgabe von an den Hydraulikzylindern der Pumpe angeordneten Sensoren über die Regeleinrichtung gesperrt und durch den Förderdruck im Pumptakt passiv geöffnet wird. Der genaue Zeitpunkt des Sperrens des Ventils ist dabei von besonderer Bedeutung, um ein Rückströmen von Fördergut in Richtung Pumpe zu verhindern. So wird das Ventil sensorgesteuert am Ende des Pumptakts zwangsgesperrt und nach dem Umschalten zum anderen Förderzylinder durch den dann einsetzenden Förderdruck passiv geöffnet. Um das Öffnen des Ventils zulassen zu können, ist an den Förderzylindern jeweils ein entsprechender Sensor oder Schalter angeordnet, der bei Betätigung bzw. Erfassung des Weges des Zylinders über die Regeleinrichtung die Sperrung des Ventils aufhebt. Dabei ist es auch möglich, dass die Ansteuerzeitpunkte des Ventils variabel in Abhängigkeit von Betriebsparametern gestaltet sein können, mit dem übergeordneten Ziel, die Dämpfung in der Förderleitung zu optimieren, also die Druckschwankungen in der Förderleitung zu minimieren.

Weiterhin ist es möglich, die Befüllvorrichtung, also vorzugsweise einen Kompressor oder Druckluftflaschen, und die Regeleinrichtung für mehr als nur eine Pumpeinheit und Förderleitung parallel einzusetzen. Die Regeleinrichtung ist dann derart ausgestattet, dass die mehreren parallelen Pumpeinheiten und Förderleitungen unabhängig voneinander angesteuert werden können. Da die Befüllvorrichtung nicht ständig tätig ist, ist die Versorgung mehrerer paralleler Pumpeinheiten und Förderleitungen auch ohne eine größere Dimensionierung der Befüllvorrichtung möglich, so dass die Wirtschaftlichkeit der Dämpfungsvorrichtung gesteigert wird. Auch ist es möglich, zwischen einem Kompressor der Befüllvorrichtung und dem mindestens einen Dämpfer einen Druckbehälter als Puffereinrichtung vorzusehen. Dies ist besonders für den Betriebsbeginn, den Anfahrvorgang, vorteilhaft, da dann eine große Menge an Arbeitsfluid bereitgestellt werden muss, um möglichst schnell die gewünschte Dämpfungscharakteristik zu erreichen. Ohne den Druckbehälter als Puffereinrichtung müßte dann ein größerer Kompressor bereit gestellt werden, als zum Dauerbetrieb der Anlage erforderlich.

Weiterhin haben Versuche ergeben, dass es von Vorteil ist, wenn die Querschnitte der Förderleitung und des mindestens einen Dämpfers, also des rohrförmigen Behältnisses, nicht stark voneinander abweichen, wobei insbesondere der Behältnisquerschnitt nicht kleiner sein sollte als der Förderleitungsquerschnitt. Anderenfalls können störende Strömungsturbulenzen im Fördergut auftreten. Dadurch können Lufttaschen im Fördergut entstehen, die das Arbeitsfluid des Dämpfers aus diesem entfernen, so dass die Dämpfungswirkung schnell nachläßt und Arbeitsfluid häufiger als erwünscht über die Befüllvorrichtung nachgefüllt werden muss, wodurch die Betriebskosten steigen.

Im Folgenden wird die Erfindung anhand eines in der Zeichnung in schematischer Weise dargestellten Ausführungsbeispiels näher erläutert. Es zeigen

Fig. 1     eine Prinzipdarstellung einer Vorrichtung zum Dämpfen von Druckschwankungen in der Förderleitung einer Zwei-Kolben-Dickstoffpumpe;

Fig. 2     ein Diagramm des Förderdrucks als Funktion der Zeit bei fehlender Fluid-Befüllung;

Fig. 3     ein Diagramm des Förderdrucks als Funktion der Zeit bei teilweiser Fluid-Befüllung;

Fig. 4     ein Diagramm des Förderdrucks als Funktion der Zeit bei gegenüber Fig. 3 erhöhter Fluid-Befüllung;

Fig. 5     ein Diagramm des Mittelwerts M des Förderdrucks in der Umschaltphase der Pumpe bei zunehmendem Fluid-Füllgrad als Funktion der Zeit; und

Fig. 6     eine Prinzipdarstellung entsprechend Fig. 1 mit einer Mehrzahl parallel betriebener Dickstoffpumpen und Förderleitungen mit jeweils zugeordneten Dämpfungsvorrichtungen.

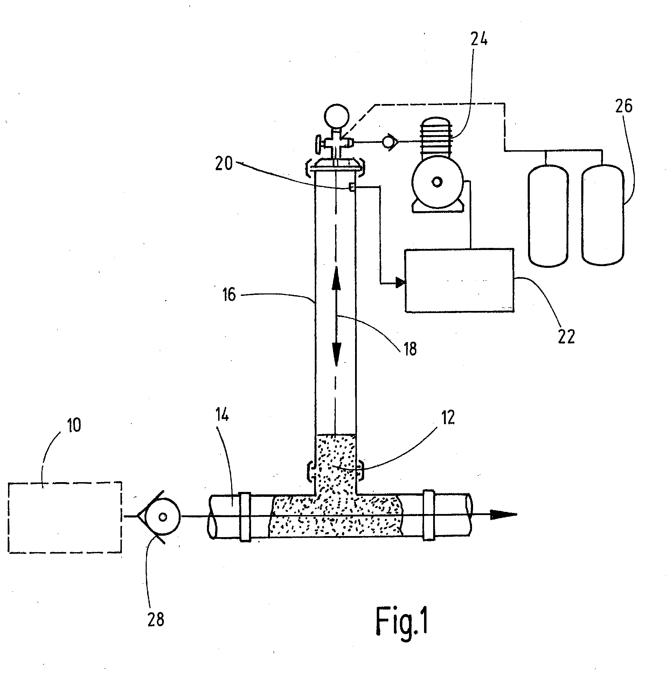

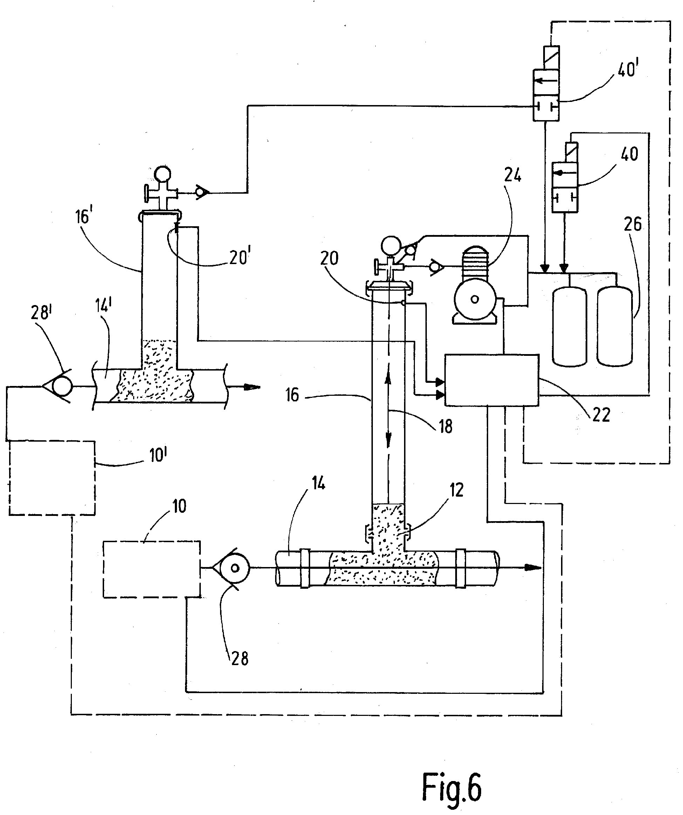

Fig. 1 stellt das Funktionsprinzip der Dämpfungsvorrichtung dar. Eine Zwei-Kolben-Dickstoffpumpe 10 pumpt im Wechseltakt der Kolben Fördergut 12 durch eine Förderleitung 14. An die Förderleitung 14 ist ein rohrförmiges Behältnis 16 als Dämpfer angeschlossen. Das Behältnis 16 ist mit Druckluft als Fluid soweit befüllt, dass eine gewisse Menge an Fördergut 12 in das Behältnis eintritt. Beim Umschalten zwischen den zwei Pumpenkolben tritt periodisch eine kurze Förderlücke auf, die zu einem kurzzeitigen Abfall des Förderdrucks und damit zu einer Pulsationsbewegung des Förderguts 12 in dem Behältnis in Richtung des Doppelpfeils 18 führt. Der Fluid-Füllgrad bzw. der Pegel des Förderguts 12 im Behältnis 16 ist so bemessen, dass die Druckluft in der Förderlücke nicht ungehindert über die Förderleitung 14 entweichen kann. Jedoch ist ein gewisser Druckluftverlust im Laufe der Zeit unvermeidlich, so dass während des Betriebs immer wieder Druckluft nachgefüllt werden muss, um das gewünschte Dämpfungsmaß aufrecht zu erhalten. An dem Behältnis 16 ist ein Drucksensor 20 (und 20' in Fig. 6) zur kontinuierlichen Messung des Förderdrucks angeordnet. Bricht der gemessene Förderdruck in der Förderlücke stark ein, so ist dies ein Anzeichen dafür, dass die Dämpfung nachgelassen hat und Druckluft nachgefüllt werden sollte. Hierzu ist eine Regeleinrichtung 22 vorgesehen, die mit dem Signal des Drucksensors 20 beaufschlagt wird und wie nachfolgend näher erläutert einen Kompressor 24 zum Nachfüllen von Druckluft in das Behältnis 16 ansteuert. Statt eines Kompressors können alternativ an das Behältnis über ein Steuerventil angeschlossene Druckluftflaschen 26 vorgesehen sein, wobei die Regeleinrichtung 22 dann das Steuerventil zum Nachfüllen von Druckluft ansteuert. Die Vorrichtung umfasst weiterhin ein in Richtung Pumpe 10 sperrendes, als Rückschlagventil 28 ausgebildetes Absperrorgan auf, damit kein Fördergut vom Dämpfer 16 in Richtung Pumpe 10 strömen kann.

Zur Steuerung des Dämpfers 16 wird der Druckverlauf in der Förderleitung 14 (Fördergut 12) oder im Dämpfer 16 (Gasseite) herangezogen. Da der Druck im Fördergut 12 derselbe ist wie in dem Druckluftvolumen, können beide wahlweise verwendet werden. Vorteil der Druckmessung auf der Druckluftseite ist, dass sich der Drucksensor 20 nicht im Fördergut 12 befindet und deshalb keinem abrassivem Verschleiß unterliegt.

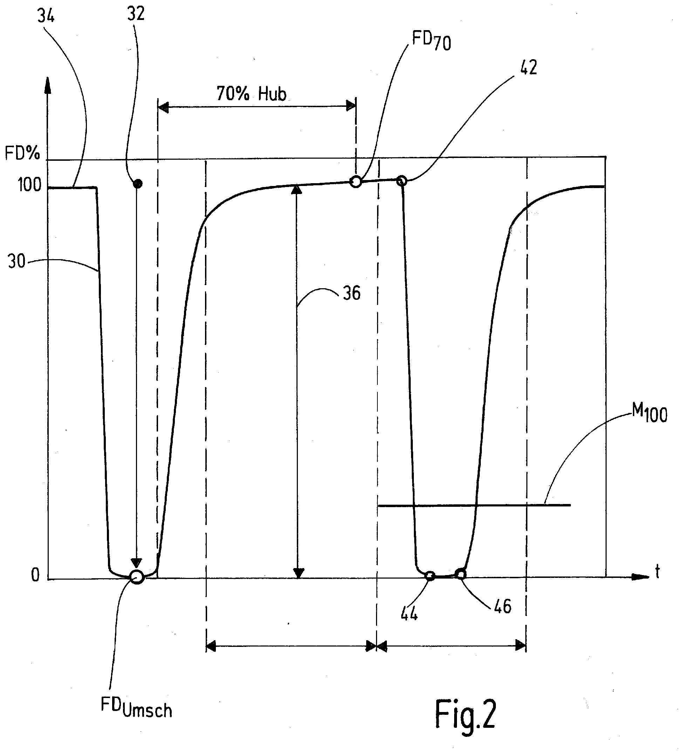

Fig. 2 zeigt den Druckverlauf 30 bei einem Druckeinbruch 32 von 100%, d.h. es ist aufgrund fehlender Druckluftfüllung keine Dämpferwirkung vorhanden. Während des Pumpenhubes wird das Maximum 34 des Förderdrucks (100%) erreicht. Beim Umschalten zwischen den zwei Pumpenkolben tritt eine Förderlücke auf, in der der Förderdruck aufgrund des nicht vorhandenen Druckluftpolsters vollständig zusammenbricht (0%). Die Differenz zwischen dem Maximaldruck und dem Minimaldruck, der Druckeinbruch, beträgt somit 100%.

Die Höhe des Druckeinbruches lässt sich automatisiert feststellen, indem für die Dauer der Umsteuerung (ca. 2 Sekunden) der Mittelwert M des Druckes im Fördergut 12 oder im Fluid, nachfolgend wird nur noch von Druck im Medium gesprochen, gebildet wird.

Je höher der Druckeinbruch, umso geringer der Mittelwert M. Je geringer der Druckeinbruch, umso höher der Mittelwert M. Alternativ zur Mittelwertsbildung kann auch ein Förderdruck zum Zeitpunkt der Umschaltphase herangezogen werden. Dieser Förderdruck kann verglichen werden mit einem Förderdruck 36 nach x % des Hubes (z.B. 70% in Fig. 2). Das Verhältnis V dieser beiden Druckwerte ist ein Maß für die Dämpfung während der Umschaltphase:

$$V_{100} = FD_{Umsch} / FD_{70}$$

wobei $FD_{Umsch}$ der Förderdruck in der Umschaltphase und $FD_{70}$ der Förderdruck nach 70% des Hubes ist.

Der auszuwertende Förderdruck FD innerhalb der Umschaltphase kann der Minimaldruck sein, muss es aber nicht zwangsläufig sein. Es kann theoretisch jeder beliebige (niedrige) Druck während der Umsteuerphase zu einem reproduzierbaren Zeitpunkt sein.

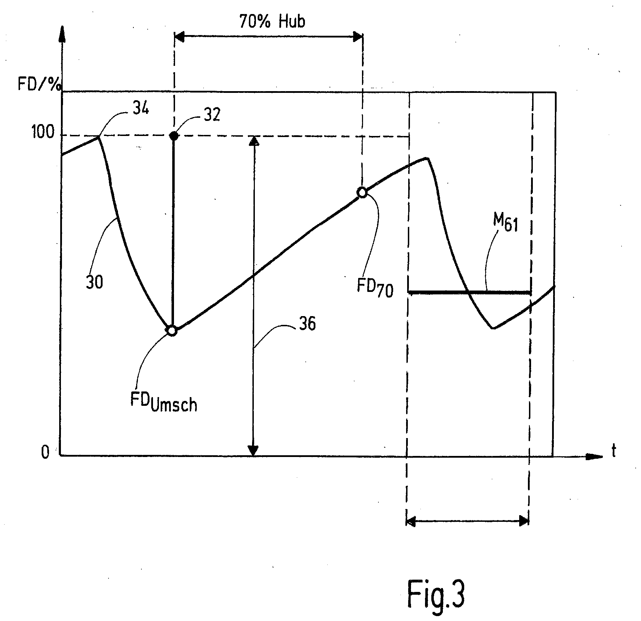

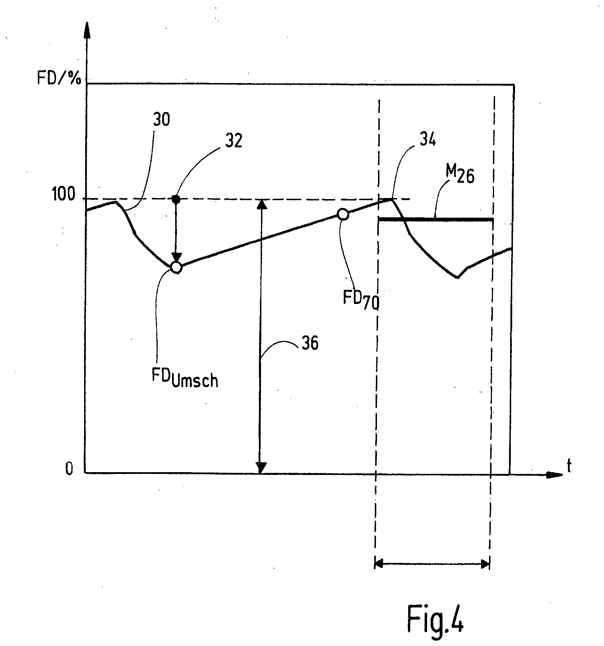

Bei den nachfolgenden Diagrammen der Fig. 3 und 4 wurde zur besseren Verständlichkeit immer der minimale Förderdruck FD während der Umschaltphase herangezogen. Der Mittelwert M oder das Druckverhältnis V ist ein Maß für die Wirksamkeit des Dämpfers. Darüber lässt sich die Druckluftbefüllung des Dämpfers 16 steuern. Unterschreitet der ermittelte Mittelwert M einen vorgegebenen unteren Schwellwert, so wird der Kompressor 24 eingeschaltet und Druckluft in den Dämpfer 16 gefüllt. Erreicht der ermittelte Mittelwert M einen vorgegebenen oberen Schwellwert, so wird der Kompressor 24 abgeschaltet und die Druckluftbefüllung gestoppt. Analog gilt dies für die Steuerung über das Druckverhältnis V. Wenn sich die Druckluftbefüllung im Laufe der Zeit und damit die Dämpferwirkung wieder reduzieren, so wird die Befüllung bei dem unteren vorgegebenen Schwellwert erneut aktiviert.

Diese Vorgehensweise funktioniert auch bei sich ändernden Maximaldrücken $FD_{max}$ und hat diesbezüglich einen Vorteil gegenüber statisch vorgespannten Membran- oder Blasendämpfern, die lediglich auf einen Betriebspunkt optimal ausgelegt sind. Die hier beschriebene Vorgehensweise passt sich wechselnden Betriebsparametern automatisch an. Hierzu ist es zweckmäßig, den Mittelwert M des Förderdrucks während der Umsteuerphase an den Mittelwert des eigentlichen Druckhubes $FD_{MittelHub}$ zu koppeln. So kann eine Aussage über die Wirkung des Dämpfers 16 auch bei sich verändernden Förderdrücken gemacht und der Fluid-Füllgrad des Dämpfers entsprechend gesteuert werden.

Das Diagramm der Fig. 3 zeigt den Förderdruckverlauf bei einem Druckeinbruch in der Umsteuerphase um 61 %. Der in diesem Fall bestimmte Mittelwert $M_{61}$ ist größer als der Mittelwert $M_{100}$ in Fig. 2. Analog ist hier das Druckverhältnis $V_{61} = FD_{Umsch} / FD_{70}$ größer als das Druckverhältnis $V_{100}$ in Fig. 2. Der Wert $M_{61}$ oder $V_{61}$ kann beispielsweise als unterer Schwellwert für das Einschalten des Kompressors 24 zur Befüllung des Dämpfers 16 verwendet werden.

Das Diagramm der Fig 4 zeigt einen entsprechenden Förderdruckverlauf bei einem Druckeinbruch in der Umsteuerphase um 26 %. Der Mittelwert $M_{26}$ ist größer als der Mittelwert $M_{61}$ in Fig. 3. Gleichsam ist hier das Verhältnis $V_{26}$ größer als das Verhältnis $V_{61}$ in Fig. 3. Der Wert $M_{26}$ oder $V_{26}$ kann als oberer Schwellwert für das Abschalten des Kompressors 24 verwendet werden.

Der kleinste erreichbare Druckeinbruch in der Umschaltphase ist anlagen-, fördergut- und maschinenabhängig. Er wird sich einstellen bei maximaler Druckluftbefüllung bei ordnungsgemäß funktionierenden Dämpfer 16. Es ergibt sich in diesem Betriebszustand der maximale Mittelwert $M_{max}$.

Es ist zweckmäßig, als oberen Schwellwert einen Mittelwert $M_{SO}$ etwas unterhalb (bspw. 5% - 10%) von $M_{max}$ vorzugeben, so dass bei Erreichen des oberen Schwellwerts die Druckluftbefüllung sicher abgeschaltet wird.

Weiterhin ist es zweckmäßig, dass die obere und untere Schaltschwelle in Abhängigkeit des Maximaldruckes $FD_{max}$ nachgeführt werden, um so immer eine optimale Dämpferwirkung zu erzielen. Hierzu ist es zweckmäßig, den Mittelwert des Druckverlaufes im Hub $FD_{MittelHub}$ zu ermitteln und anhand dessen die Schaltschwellen nachzuführen.

Um einen stabilen Mittelwert anzuzeigen (z.B. an einem Steuerungsdisplay) ist es auch zweckmäßig, periodisch aus mehreren Mittelwerten wiederum einen Mittelwert zu bilden (z.B. aus 20 Mittelwerten wird wieder ein Mittelwert gebildet). Dies unterdrückt Ausreißer nach oben und unten und verhindert das vorzeitige Ansprechen der Schaltschwellen.

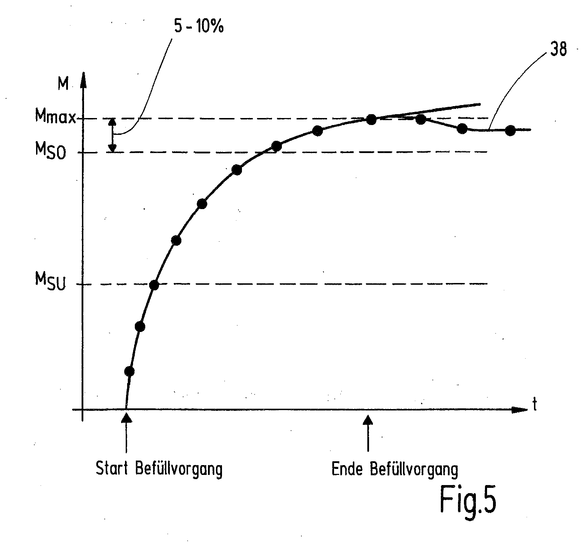

Die Ermittlung der oberen und unteren Schwellwerte für das Anschalten und Abschalten des Kompressors 24 wird anhand des Diagramms der Fig. 5 erläutert.

Die Ermittlung der unteren Schwellwerte erfolgt vorzugsweise bei der Inbetriebnahme der Pumpeneinrichtung und ist abhängig vom Verhalten der Förderleitung 14 hinsichtlich Schwingungen und Geräuschen. Dies kann dadurch ermittelt werden, dass der Dämpfer 16 sukzessive mit Druckluft befüllt wird und dabei das Anlagen- bzw. Förderleitungsverhalten beobachtet wird. Dies kann beispielsweise auch durch eine Anzeige des Druckverlaufes während der Umschaltphase an der Regeleinrichtung 22 erfolgen. Die Darstellung des Druckverlaufes sollte mit hoher Abtastrate erfolgen (mind. 100 Hz) um den Druckeinbruch zeitgenau darstellen und bewerten zu können. Ist der Punkt gefunden bei dem befriedigende Anlagenfunktion herrscht, so kann dieser Mittelwert M als unterer Schwellwert $M_{SU}$ in der Steuerung hinterlegt werden.

Die Ermittlung des maximalen Mittelwertes $M_{max}$ erfolgt ebenfalls bei der Inbetriebnahme indem man beobachtet, ab wann sich keine Veränderung bzw. Verbesserung im Dämpferverhalten mehr ergibt. Dieser Wert wird dann ebenso in der Regeleinrichtung gespeichert. Ausgehend von diesem Wert kann dann der obere Schwellwert $M_{SO}$ wie zuvor beschrieben eingestellt werden.

Die Mittelwerte werden über dem Zeitverlauf in einem Graphen an der Regeleinrichtung dargestellt. Durch diese Zeitkurve lässt sich gut erkennen, wann der obere Schwellwert erreicht ist. Dies ist der Zeitpunkt, ab dem die Steigung der Kurve zunehmend flacher wird, d. h. die Wirkung des Dämpfers 16 nicht weiter ansteigt. Zu diesem Zeitpunkt kann der Inbetriebnahme- und Befüllvorgang abgebrochen werden. Bevor sich das System stabilisiert, wird möglicherweise noch etwas Druckluft in die Rohrleitung entweichen (zu erkennen ist dies am geringer werdenden Mittelwert), was aber die Dämpferfunktion nicht wesentlich beeinflusst. Der obere Schwellwert $M_{SO}$ soll aber in jedem Fall unterhalb des Mittelwertes der Stabilisierungsphase 38 liegen.

Fig. 6 zeigt eine der Fig. 1 entsprechende Prinzipdarstellung, wobei jedoch zwei parallel angeordnete Dickstoffpumpen 10, 10' und bedämpfte Förderleitungen 14, 14' vorgesehen sind, wobei diese Darstellung nur beispielhaft ist und ohne weiteres auch drei oder mehr Dickstoffpumpen und Förderleitungen vorhanden sein könnten. Bei dieser Ausführungsvariante werden die unterschiedlichen Pumpstränge, also Dickstoffpumpen 10, 10' und zugehörige Förderleitungen 14, 14' parallel von einer einzigen Regeleinrichtung 22 angesteuert und von einer einzigen Befüllvorrichtung 24, 26 mit Fluid beaufschlagt. Die einzelnen Pumpstränge sind autark und können sich beispielsweise hinsichtlich ihrer Pumptakte und ihrer Fördervolumen, also Pumpen- und Förderleitungsgröße, voneinander unterscheiden. Die Absperrorgane 28, 28' sind als zwangsgesteuerte, hydraulisch betätigte Ventile ausgebildet, die von der Regeleinrichtung 22 zum Sperren und Entsperren angesteuert werden. Als Parameter für die Zeitpunkte des Sperrens und Entsperrens wird dabei auf mittels Sensoren oder Schalter erfasste Positionsbestimmungen der Förderkolben der Dickstoffpumpen 10, 10' zurück gegriffen. Das Schließen oder Sperren des Ventils 28, 28' erfolgt dabei erzwungen, während das Öffnen des Ventils passiv durch den Förderdruck der Dickstoffpumpe 10, 10' nach dem Entsperren des Ventils 28, 28' durch die Regeleinrichtung 22 erfolgt. Das Beaufschlagen der Behältnisse 16, 16' mit Fluid wird mit der Regeleinrichtung 22 durch Ansteuerung der Zweiwegeventile 40, 40' bewirkt, die unabhängig voneinander schaltbar sind. In Fig. 2 sind bei 42, 44 und 46 die Zeitpunkte gekennzeichnet, zu denen das Ventil 28, 28' angesteuert wird. Zum Zeitpunkt 42 ist der Förderhub beispielsweise des ersten Förderzylinders beendet. Das Ventil 28, 28' wird hydraulisch gesperrt. Bei 44 findet das Umschalten zwischen dem ersten und dem zweiten Förderzlinder statt. Das Ventil 28, 28' wird entspannt, d.h. die Zwangssteuerung bzw. Sperrung abgeschaltet. Zum Zeitpunkt 46 beginnt der Arbeitshub des zweiten Förderzylinders und der so erzeugte Förderdruck schiebt das Ventil 28, 28' auf, so dass die Charge Fördergut in die Förderleitung 14, 14' gepumpt wird.

Zusammenfassend ist folgendes festzuhalten: Die Erfindung betrifft eine Vorrichtung und ein Verfahren zum Dämpfen von Druckschwankungen in einer Förderleitung 14 einer Zwei-Kolben-Dickstoffpumpe 10, mit mindestens einem an die Förderleitung 14 angeschlossenen, mit einem kompressiblen Fluid zumindest teilweise befüllten Behältnis 16 zur pulsierenden Aufnahme und Abgabe von Fördergut 12 im Arbeitstakt der Dickstoffpumpe 10 unter abwechselnder Kompression und Expansion des Fluids. Zur Realisierung einer kostengünstigen und zuverlässigen Dämpfung wird gemäß der Erfindung eine Regeleinrichtung 22 für den Fluid-Füllgrad in dem Behältnis 16 in Abhängigkeit von Betriebsparametern während des Pumpbetriebs vorgeschlagen, die mindestens einen in dem Behältnis 16 oder der Förderleitung 14 angeordneten Drucksensor 20 zur Bestimmung des Förderdrucks sowie eine elektronische Recheneinheit aufweist, die dazu bestimmt und geeignet ist, ein Druckverhältnis V zwischen Förderdruckwerten während eines Arbeitstaktes der Dickstoffpumpe 10 einerseits und einer Umschaltphase zwischen den jeweiligen Arbeitstakten der zwei Kolben der Dickstoffpumpe andererseits oder einen Mittelwert M des Förderdrucks über ein Zeitintervall während der Umschaltphase als Maß für die Wirksamkeit der Dämpfung zu bestimmen und zu speichern.

**Patentansprüche**

1.　Vorrichtung zum Dämpfen von Druckschwankungen in einer Förderleitung (14) einer Kolben-Dickstoffpumpe (10), mit mindestens einem mit der Förderleitung kommunizierenden, mit einem kompressiblen Fluid zumindest teilweise befüllten Behältnis (16) zur pulsierenden Aufnahme und Abgabe von Fördergut (12) im Pumpbetrieb der Dickstoffpumpe (10) unter abwechselnder Kompression und Expansion des Fluids, **gekennzeichnet durch** eine Regeleinrichtung (22) für den Fluid-Füllgrad in dem Behältnis (16) in Abhängigkeit von Betriebsparametern während des Pumpbetriebs, die mindestens einen Drucksensor (20) zur Bestimmung des Förderdrucks sowie eine elektronische Recheneinheit aufweist, die dazu bestimmt und geeignet ist, ein Druckverhältnis V zwischen Förderdruckwerten während eines Arbeitstaktes der Dickstoffpumpe (10) einerseits und einer Umschaltphase zwischen den jeweiligen Arbeitstakten der Kolben der Dickstoffpumpe andererseits oder einen Mittelwert M des Förderdrucks über ein Zeitintervall während der Umschaltphase als Maß für die Wirksamkeit der Dämpfung zu bestimmen und zu speichern.

2.　Vorrichtung nach Anspruch 1, **dadurch gekennzeichnet, dass** der zur Bildung des Druckverhältnisses V verwendete Förderdruckwert des Arbeitstaktes ein diskreter Wert im Bereich des Förderdruckmaximums ist.

3.　Vorrichtung nach Anspruch 1 oder 2, **gekennzeichnet durch** eine Befüllvorrichtung (24, 26) zum Befüllen des mindestens einen Behältnisses (16) mit dem Fluid nach Maßgabe der Regeleinrichtung (22).

4.　Vorrichtung nach Anspruch 3, **dadurch gekennzeichnet, dass** die Befüllvorrichtung als Luftkompressor (24) oder als mindestens eine Druckflasche (26) ausgebildet ist.

5.　Vorrichtung nach einem der Ansprüche 1 bis 4, **gekennzeichnet durch** ein zwischen der Dickstoffpumpe (10) und dem mindestens einen Behältnis (16) angeordnetes, in Richtung der Dickstoffpumpe sperrendes, vorzugsweise als Rückschlagventil ausgebildetes Absperrorgan (28).

6.　Vorrichtung nach Anspruch 5, **dadurch gekennzeichnet, dass** das Absperrorgan (28) als zwangsgesteuertes Ventil ausgebildet ist, dass über die Regeleinrichtung (22) nach Maßgabe von an der Dickstoffpumpe erfassten Wegeparametern sperrbar und entsperrbar ist.

7.　Vorrichtung nach Anspruch 6, **dadurch gekennzeichnet, dass** Schaltzeitpunkte für das Sperren und/oder Entsperren des Absperrorgans zur Minimierung von Druckschwankungen in der Förderleitung variabel wählbar sind.

8. Vorrichtung nach einem der Ansprüche 3 bis 7, **dadurch gekennzeichnet, dass** in der Regeleinrichtung (22) untere und obere Schwellwerte für eine Inbetriebnahme und eine Abschaltung der Befüllvorrichtung (24, 26) gespeichert sind.

9. Vorrichtung nach einem der Ansprüche 1 bis 8, **dadurch gekennzeichnet, dass** das mindestens eine Behältnis (16) als Druckbehältnis ausgebildet ist.

10. Vorrichtung nach einem der Ansprüche 1 bis 9, **dadurch gekennzeichnet, dass** mehr als ein Behältnis (16) in paralleler Anordnung oder in Reihenanordnung an die Förderleitung (14) angeschlossen ist.

11. Vorrichtung nach einem der Ansprüche 3 bis 10, **dadurch gekennzeichnet, dass** eine Mehrzahl von Kolben-Dickstoffpumpen (10, 10') und Förderleitungen (14, 14') mit jeweils mindestens einem Behältnis (16, 16') vorgesehen und in paralleler Anordnung über eine einzige Regeleinrichtung (22) ansteuerbar und eine einzige Befüllvorrichtung (24, 26) mit Fluid beaufschlagbar ist.

12. Vorrichtung nach einem der Ansprüche 3 bis 11, **dadurch gekennzeichnet, dass** zwischen der Befüllvorrichtung (24, 26) und dem mindestens einen Behältnis (16) ein Druckbehälter als Pufferspeicher für das Fluid angeordnet ist.

13. Vorrichtung nach einem der Ansprüche 1 bis 12, **dadurch gekennzeichnet, dass** ein Querschnitt der Förderleitung (14) um nicht mehr als 25% von einem an die Förderleitung (14) anschließenden Querschnitt des Behältnisses (16) abweicht, vorzugsweise um weniger als 5%, wobei der Querschnitt des Behältnisses (16) der größere ist.

14. Verfahren zum Dämpfen von Druckschwankungen in einer Förderleitung (14) einer Kolben-Dickstoffpumpe (10), mit mindestens einem mit der Förderleitung kommunizierenden, mit einem kompressiblen Fluid zumindest teilweise befüllten Behältnis (16) zur pulsierenden Aufnahme und Abgabe von Fördergut (12) im Arbeitstakt der Dickstoffpumpe unter abwechselnder Kompression und Expansion des Fluids, **dadurch gekennzeichnet, dass** mittels einer Regeleinrichtung (22) ein Fluid-Füllgrad in dem Behältnis in Abhängigkeit von Betriebsparametern während des Pumpbetriebs zwischen vorgegebenen Minimal- und Maximalwerten aufrecht erhalten wird, wobei ein Förderdruck mit mindestens einem in dem Behältnis (16) oder der Förderleitung (14) angeordneten Drucksensor (20) kontinuierlich bestimmt wird und mit einer elektronischen Recheneinheit der Regeleinrichtung (22) ein Druckverhältnis V zwischen Förderdruckwerten während eines Arbeitstaktes der Dickstoffpumpe (10) einerseits und einer Umschaltphase zwischen den jeweiligen Arbeitstakten der Kolben der Dickstoffpumpe andererseits oder ein Mittelwert M des Drucks über ein Zeitintervall während der Umschaltphase als Maß für die Wirksamkeit der Dämpfung bestimmt und gespeichert wird.

15. Verfahren nach Anspruch 14, **dadurch gekennzeichnet, dass** zur Bildung des Druckverhältnisses V als Förderdruckwert des Arbeitstaktes ein diskreter Wert im Bereich des Förderdruckmaximums verwendet wird.

**Claims**

1. A device for damping pressure fluctuations in a delivery line (14) of a thick-matter piston pump (10), comprising at least one container (16) which communicates with the delivery line and is at least partially filled with a compressible fluid, for a pulsing intake and output of transported material (12) during the pumping operation of the thick-matter pump (10) with alternating compression and expansion of the fluid, **characterized by** a control device (22) for the fluid filling level in the container (16) depending on operating parameters during pump operation, said control device comprising at least one pressure sensor (20) for determining the delivery pressure and also an electronic computing unit which is intended and suitable for determining and storing a pressure ratio V between delivery pressure values during a working cycle of the thick-matter pump (10), on the one hand, and a switch-over phase between each of the working cycles of the pistons of the thick-matter pump, on the other hand, or a mean value M of the delivery pressure over a time interval during the switch-over phase as a measure of the effectiveness of the damping.

2. The device as claimed in claim 1, **characterized in that** the delivery pressure value of the working cycle used for determining the pressure ratio V is a discrete value in the region of the maximum delivery pressure value.

3. The device as claimed in claim 1 or 2, **characterized by** a filling device (24, 26) for filling the at least one container (16) with fluid in response to the control device (22).

4. The device as claimed in claim 3, **characterized in that** the filling device is configured as an air compressor (24) or as at least one pressure cylinder (26).

5. The device as claimed in one of claims 1 to 4, **characterized by** a shut-off device (28), preferably configured as a non-return valve, disposed between the thick-matter pump (10) and the at least one container (16), which shut-off device (28) closes in the direction of the thick-matter pump.

6. The device as claimed in claim 5, **characterized in that** the shut-off device (28) is configured as a forced-control valve which can be closed and released via the control device (22) in response to stroke parameters collected at the thick-matter pump.

7. The device as claimed in claim 6, **characterized in that** switching times for the closure and/or release of the shut-off device are variably selectable to minimize pressure fluctuations in the delivery line.

8. The device as claimed in one of claims 3 to 7, **characterized in that** lower and upper threshold values are stored in the control device (22) for starting and switching off the filling device (24, 26).

9. The device as claimed in one of claims 1 to 8, **characterized in that** the at least one container (16) is configured as a pressure container.

10. The device as claimed in one of claims 1 to 9, **characterized in that** more than one container (16) is connected to the delivery line (14) in parallel configuration or in series configuration.

11. The device as claimed in one of claims 3 to 10, **characterized in that** a plurality of piston thick-matter pumps (10, 10') and delivery lines (14, 14') each with at least one container (16, 16') is provided, which are controlled in parallel by a single control device (22) and are subjected to fluid from a single filling device (24, 26).

12. The device as claimed in one of claims 3 to 11, **characterized in that** a pressure container is disposed as a buffer store for the fluid between the filling device (24, 26) and the at least one container (16).

13. The device as claimed in one of claims 1 to 12, **characterized in that** a cross section of the delivery line (14) differs by no more than 25%, preferably by less than 5%, from a cross section of the container (16) connected to the delivery line (14), wherein the cross section of the container (16) is the greater.

14. A method for damping pressure fluctuations in a delivery line (14) of a thick-matter piston pump (10), comprising at least one container (16) connected to the delivery line and at least partially filled with a compressible fluid, for the pulsing intake and output of transported material (12) during the working cycle of the thick-matter pump with alternating compression and expansion of the fluid, **characterized in that** by means of a control device (22), a fluid filling level in the container is maintained between pre-set minimum and maximum values depending on operating parameters during the pumping operation, wherein a delivery pressure is continuously determined with at least one pressure sensor (20) arranged in the container (16) or the delivery line (14) and using an electronic computing unit of the control device (22), a pressure ratio V between delivery pressure values during a working cycle of the thick-matter pump (10), on the one hand, and a switchover phase between each of the working cycles of the pistons of the thick-matter pump, on the other hand, or a mean value M of the pressure over a time interval during the switch-over phase is determined and stored as a measure of the effectiveness of the damping.

15. The method as claimed in claim 14, **characterized in that** to form the pressure ratio V a discrete value in the region of the maximum delivery pressure value is used as the delivery pressure value of the working cycle.

**Revendications**

1. Dispositif destiné à atténuer des fluctuations de pression dans un conduit de refoulement (14) d'une pompe à piston pour matières épaisses (10), comprenant au moins un récipient (16), rempli au moins en partie avec un fluide compressible, qui entre en communication avec le conduit de refoulement, destiné à la réception et à l'évacuation par pulsations d'un produit de refoulement (12) au cours du fonctionnement de pompage de la pompe pour matières épaisses (10) dans des conditions alternées de compression et d'expansion du fluide, **caractérisé par** un mécanisme de réglage (22) destiné au degré de remplissage de fluide dans le récipient (16) en fonction de paramètres d'exploitation au cours du pompage, qui présente au moins un capteur de pression (20) destiné à déterminer la pression de refoulement, ainsi qu'une unité de calcul électronique qui est destinée et appropriée pour déterminer et pour enregistrer un rapport de pression V entre des valeurs de pression de refoulement au cours d'un cycle de travail de la pompe pour matières épaisses (10) d'une part et d'une phase de commutation entre les cycles de travail respectifs du piston de la pompe pour matières épaisses d'autre part ou une valeur moyenne M de la pression de refoulement pendant un intervalle de temps au cours de la phase de commutation, à titre de mesure pour l'efficacité de l'atténuation.

2. Dispositif selon la revendication 1, **caractérisé en ce que** la valeur de pression de refoulement du cycle de travail utilisée pour l'obtention du rapport de pression V représente une valeur discrète dans la plage du maximum de pression de refoulement.

3. Dispositif selon la revendication 1 ou 2, **caractérisé par** un dispositif de remplissage (24, 26) destiné au remplissage dudit au moins un récipient (16) avec le fluide en fonction du mécanisme de réglage (22).

4. Dispositif selon la revendication 3, **caractérisé en ce que** le dispositif de remplissage est réalisé sous la forme d'un compresseur d'air (24) ou sous la forme d'au moins une bonbonne sous pression (26).

5. Dispositif selon l'une quelconque des revendications 1 à 4, **caractérisé par** un organe d'obturation (28) réalisé de préférence sous la forme d'une soupape de non-retour, qui met en oeuvre un verrouillage dans la direction de la pompe pour matières épaisses, disposé entre la pompe pour matières épaisses (10) et ledit au moins un récipient (16).

6. Dispositif selon la revendication 5, **caractérisé en ce que** l'organe d'obturation (28) est réalisé sous la forme d'une soupape commandée de manière forcée, qui peut être verrouillée et déverrouillée par l'intermédiaire du mécanisme de réglage (22) en fonction de paramètres de passage saisis à la pompe pour matières épaisses.

7. Dispositif selon la revendication 6, **caractérisé en ce que** des moments de commutation pour le verrouillage et/ou le déverrouillage de l'organe d'obturation peuvent être sélectionnés de manière variable à des fins de minimisation de fluctuations de pression dans le conduit de refoulement.

8. Dispositif selon l'une quelconque des revendications 3 à 7, **caractérisé en ce que**, dans le mécanisme de réglage (22), sont enregistrées des valeurs seuil inférieure et supérieure pour une mise en marche et une mise à l'arrêt du dispositif de remplissage (24, 26).

9. Dispositif selon l'une quelconque des revendications 1 à 8, **caractérisé en ce que** ledit au moins un récipient (16) est réalisé sous la forme d'un récipient sous pression.

10. Dispositif selon l'une quelconque des revendications 1 à 9, **caractérisé en ce que** plus d'un récipient (16) sont raccordés dans un montage en parallèle ou dans un montage en série au conduit de refoulement (14).

11. Dispositif selon l'une quelconque des revendications 3 à 10, **caractérisé en ce que** l'on prévoit une multitude de pompes à piston pour des matières épaisses (10, 10') et une multitude de conduits de refoulement (14, 14') comprenant respectivement au moins un récipient (16, 16') et qui, dans un montage en parallèle, peuvent être commandés par l'intermédiaire d'un seul dispositif de réglage (22) et être sollicités avec un fluide par l'intermédiaire d'un seul dispositif de remplissage (24, 26).

12. Dispositif selon l'une quelconque des revendications 3 à 11, **caractérisé en ce que**, entre le dispositif de remplissage (24, 26) et ledit au moins un récipient (16) est disposé un réservoir de pression réalisé sous la forme de réservoir tampon pour le fluide.

13. Dispositif selon l'une quelconque des revendications 1 à 12, **caractérisé en ce qu'**une section transversale du conduit de refoulement (14) ne s'écarte pas de plus de 25 % d'une section transversale du récipient (16), qui se raccorde au conduit de refoulement (14), de préférence à raison de moins de 5 % ; dans lequel la section transversale du récipient (16) est la plus élevée.

14. Procédé pour l'amortissement de fluctuations de pression dans un conduit de refoulement (14) d'une pompe à piston pour matières épaisses (10), comprenant au moins un récipient (16), rempli au moins en partie avec un fluide compressible, qui entre en communication avec le conduit de refoulement, destiné à la réception et à l'évacuation par pulsations d'un produit de refoulement (12) au cours du cycle de travail de la pompe pour matières épaisses dans des conditions alternées de compression et d'expansion du fluide, **caractérisé en ce que**, au moyen d'un mécanisme de réglage (22), on maintient un degré de remplissage de fluide dans le récipient en fonction de paramètres d'exploitation au cours du pompage entre des valeurs minimale et maximale qui ont été prédéfinies ; dans lequel une pression de refoulement est déterminée en continu avec au moins un capteur de pression (20) disposé dans le récipient (16) ou dans le conduit de refoulement (14) et on détermine et on enregistre, avec une unité de calcul électronique du dispositif de réglage (22), un rapport de pression V entre des valeurs de pression de refoulement au cours d'un cycle de travail de la pompe pour matières épaisses (10) d'une part et d'une phase de commutation entre les cycles de travail respectifs du piston de la pompe pour matières épaisses d'autre part ou une valeur moyenne M de la pression pendant un intervalle de temps au cours de la phase de commutation, à titre de mesure pour l'efficacité de l'atténuation.

15. Procédé selon la revendication 14, **caractérisé en ce qu'**on utilise, pour l'obtention du rapport de pression V, à titre de valeur de pression de refoulement du cycle de travail, une valeur discrète dans la plage du maximum de pression de refoulement.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030221722 A1